# EUROPEAN PATENT APPLICATION

(11) **EP 4 841 543 A1**
(43) Date of publication of application: **18.11.2026**
(21) Application number: 25176514.5
(22) Date of filing: 14.05.2025
(51) Int. Cl.: G06Q 30/018, G06Q 50/40, G07B 15/06

(54) **WHITELIST-BASED VIRTUAL COMPLIENCE CHECK IN DISTRIBUTED SYSTEMS**

(71) Applicant: Deutsche Telekom AG, 53113 Bonn (DE)
(72) Inventor: FUNK, Marcus Andreas, 10243 Berlin (DE)
(74) Representative: Vossius & Partner Patentanwälte Rechtsanwälte mbB

(57) **Abstract**

The present invention relates to a method, an apparatus and a computer program product for determining a compliance of a device with a contracting system, wherein the method comprises acquiring, by an identification unit, an identifier which is specific to the device, obtaining, by the identification unit, compliance-related data associated with the device, from a user management unit based on the acquired identifier, obtaining, by the identification unit, a control message from the device, wherein the control message comprises compliance-related data and determining, by the identification unit, whether the compliance-related data obtained from the device complies with the compliance-related data obtained from the user management unit.

## Description

In many jurisdictions, governments impose tolls for the use of certain roadways or areas, which may include specific segments or the entire national road network. Toll collection may be facilitated through systems requiring pre-purchased access authorizations (e.g., bookings), or through systems registering and charging (detecting) the actual usage of toll roads. Service providers operating such services may be fully public entities or may operate under private or mixed ownership structures.

Booking systems typically issue physical or virtual tickets, badges, vignettes or tags. Physical badges may be affixed to a vehicle-e.g., on the windshield-and are designed to be detectable via automated means (e.g., through permanently or flexibly installed camera systems or tag readers) or via manual inspection (e.g., by police officers or toll authorities).

Virtual tickets are linked to observable unique features of the vehicle (e.g. license plate or physical badges). Bookings might be issued on a single contract basis or as part of a standing contract between the user and the service provider, the existing bookings are managed in a whitelist (other lists exist e.g. for exempted and banned vehicles). These lists in combination with the physical identification or authorization feature of a vehicle enable the assessment of whether a road user is in compliance with applicable toll regulations.

In toll detection systems, the use of a toll road does not require the pre-purchase of access authorizations. Instead, users may enter into contracts with toll service providers that allow those to detect and transfer tolls as the infrastructure is used. In such schemes, the vehicle of a user (e.g., a car, motorcycle, etc.) may be registered with the service provider and entered into a whitelist. Again, this registration process may involve linking a unique vehicle identifier-such as a license plate number or a radio frequency (RF) module acting as a transponder-to the contract. An entry in the whitelist may indicate the existence of a valid contract between the user and the service provider, authorizing the vehicle's use of toll roads administered by that provider.

In general, the whitelist may further include metadata related to the contractual relationship, such as a contract number, current contract status (e.g., active, paused, or cancelled), contract plan, and other relevant information. Additionally, it may include technical characteristics of the vehicle, such as vehicle type, model, configuration, weight, propulsion system, and emission class.

In some implementations, toll events may be recorded by roadside infrastructure that identifies vehicles as they pass. Identification may be performed through license plate recognition or communication with a vehicle-installed transponder. The system may record a tuple comprising the location of the vehicle and a corresponding timestamp. Based on this data, the system may determine whether the identified vehicle corresponds to an entry in the whitelist and whether a valid contract exists.

If a valid association (without any dissent) is found, it may be concluded that the user is compliant with the service provider's tolling framework, e.g., by having prepaid tolls or having registered valid payment credentials. If the vehicle is not listed in the whitelist or if the stored data appears inconsistent, the system may flag the event as a suspected infringement, potentially subject to further investigation.

In other examples, toll determination may be executed by a vehicle-side system or a combination of a vehicle-side system and external services. Such a system may autonomously determine-based on current positional data-whether the vehicle is on a toll road, and may initiate toll payment accordingly.

System integrity and compliance may be monitored through communication between the vehicle-side system and roadside infrastructure. This communication may utilize optical or RF-based channels and may include the transmission of operational states, system health, or other relevant indicators. The roadside infrastructure may query the whitelist and compare the received data with stored contract information. Discrepancies may result in the generation of suspected cases with corresponding evidence.

These tolling approaches, however, introduce a number of challenges. The collection and processing of personal data-such as location and vehicle identifiers-raises potential privacy concerns, especially in the case of automated toll detection. Furthermore, the centralization of user-related and payment-related data increases the risk associated with unauthorized access or misuse.

EP 3 035 296 A1, EP 2 320 386 A1, WO 2009/001303 A1, WO 2008/000227 A1 propose implementations for a protocol between vehicle-side and external systems and a generation of toll events required for billing with a high level of data protection, i.e. without disclosing a relationship between vehicle identity and detailed positions of the vehicle.

When it comes to compliance checks, implementing privacy-optimized solutions presents a fundamental challenge, as compliance verification relies on a target/actual comparison of relevant data. In centralized systems without privacy, this could be achieved by transmitting and evaluating all relevant data (positions, system states, etc.), which, however, would result in complete user traceability. Therefore, automatic detection systems typically use local data exchange between the vehicle-side and compliance check equipment and local analysis to reliably detect the condition of vehicle equipment and to minimize the data collected centrally during regular operation.

This generally requires special local communication devices (providing dedicated short-range communication (DSRC) or other V2X protocols), which limits the hardware available for use on the vehicle to devices with these features.

Moreover, the use of third-party service providers to host whitelists may further intensify data protection concerns, as sensitive contract and usage data may be handled outside direct governmental oversight.

DE 10 2023 111 505 A1 discloses a secure service registration procedure. A secure connection is established between a vehicle and a management system. A service request is sent to the management system to access a V2X service, where the service request includes a public key of the vehicle. A certificate bundle encrypted using the vehicle's public key is received from the management system, the certificate bundle including a public/private key pair of the service and a certificate for accessing the V2X service. The certificate bundle is decrypted using a vehicle private key that corresponds to the vehicle public key. The service's public/private key pair and certificate are used to access the V2X service.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method (e.g. a computer-implemented method) for determining a compliance of a device with a contracting system. The method may comprise acquiring, by an identification unit, an identifier which is specific to the device, obtaining, by the identification unit, compliance-related data associated with the device, from a user management unit based on the acquired identifier, obtaining, by the identification unit, a control message from the device, wherein the control message comprises compliance-related data and determining, by the identification unit, whether the compliance-related data obtained from the device complies with the compliance-related data obtained from the user management unit.

Various embodiments may preferably implement the following features.

In some embodiments, the determining may further comprise determining whether at least one compliance-related feature of the device, observed by the identification unit, complies with the compliance-related data obtained from the user management unit.

In some embodiments, the device may be a user device, i.e., a device that is associated and/or assigned to a user of the contracting system.

In the present context, compliance may be referred to as the extent to which the actions of the user (and a device, respectively) adhere and/or conform with the obligations and/or conditions that are explicitly or at least implicitly defined by an agreement between the user and a service provider. The agreement may be a logical agreement and/or may be a contractual agreement. That is, if there is a contract between the user and the service provider, the user may have agreed to certain terms and conditions. The fulfillment of said terms and conditions may be referred to as compliance. If a user (device) does not have a (valid) contract with the service provider, the user (device) may be identified as not complying with the contracting system and may thus also not comply with the terms and conditions of the service provider.

In some embodiments, the acquiring, by the identification unit, may comprise a request on demand or a distributing of the whitelist to the identification unit thus reducing a load and availability requirements for an on-demand endpoint (which may only be used when local data is not available or up to date). Moreover, increased privacy may be fostered as the number of observation-related requests (e.g., disclosing an observation time and a potential location of the device) at a centrallized instance may be minimized. As a general remark, from a privacy point of view, a combination of time information and location information of the device may be seen as being of particular relevance.

In some embodiments, the identifier may be physically connected to the device. Additionally or alternatively, the identifier may be portable and/or mobile.

In some embodiments, the determining of the compliance of the device with the contracting system may be based on a single identification unit. In some embodiments, the determining of the compliance of the device with the contracting system may be based on more than one identification unit.

This may support an improved and increased privacy when determining the compliance of the device with the contracting system as the acquiring of the identifier and the determining whether the user (device) complies with the contracting system may be performed by the same entity, notably, the identification unit. Therefore, no additional entity is required (and in particular, no third-party service provider) which performs the determining. What is more, the determining whether the user (device) complies with the contracting system may be less data intensive as no data streams need to be communicated between the identification unit and a potential third-party service provider.

From a privacy perspective, direct communication between the device and the identification unit may provide the advantage that relevant data is not transmitted via third parties and that latency is potentially reduced. This may mean that the identification unit may directly specify its own address in the compliance request (directly or via a third party), where the response is expected.

Thus, the proposed method, with or without an application of cryptographic methods, may enable a determination of a status of vehicle-side devices located in a publicly accessible, near-real-time communication network, e.g., by roadside equipment without requiring dedicated devices for local communication. This may facilitate a local compliance check that includes all relevant data without unnecessarily compromising data protection by transmitting sensitive data to a third party without initial suspicion.

Preferably, the obtaining of the compliance-related data further comprises providing, by the identification unit, the acquired identifier and a request for specific compliance-related data to the user management unit and providing, by the user management unit, the compliance-related data in accordance with the request to the identification unit.

Preferably, the acquired identifier may be represented by its hashed value. In some embodiments, the hashed value may be a seeded hash, e.g., to avoid replay attacks.

The compliance-related data may be data which may support a determination whether the user (device) complies with the contracting system. The compliance-related data may, e.g., comprise a contract number, a current status of the contract (active/paused/cancelled, etc.), observable features of the device (size, geometry, type) and/or information associated with a contract plan.

Specific compliance-related data may refer to a subset of compliance-related data which may be necessary for facilitating the determining whether the user (device) complies with the contracting system in a given context. That is, in some embodiments, only a contract number and/or a current status of the contract may be required to determine the compliance.

This may enable a tailored usage of data for determining the compliance of the user (device) with the contracting system. It may decrease the total amount of data that needs to be processed and transmitted which may support an efficient usage of resources. What is more, it may support an increased privacy for the user (device) when performing the determining of the compliance of the user (device) with the contacting system as less data needs to be accessed.

Preferably, the method may further comprise providing, by the identification unit, a fraud indication in case it is determined that the compliance-related data obtained or observed from the device does not comply with the compliance-related data obtained from the user management unit.

In some embodiments, compliance-related data obtained from the device may refer to data that is retrieved from the device (e.g., an identification number of the device, a token, a hash value, etc.).

In some embodiments, compliance-related data observed from the device may, e.g., refer to a photograph of the device (e.g., a photo of a vehicle showing an identifier that may be assigned to the device).

A fraud indication may be referred to as an indication indicating that a discrepancy has been determined between the compliance-related data received from the user management unit and the compliance-related data obtained from the device which is comprised by the control message.

In some embodiments, the compliance-related data comprised by the control message may be identical to the compliance-related data received from the user management unit. In some embodiments the information comprised by the control message may at least facilitate a derivation of information comprised by the compliance-related data obtained from the user management unit (or vice versa).

The fraud indication may indicate that a fraud attempt has been detected. In some embodiments, the fraud indication may indicate that fraud may have occurred with a certain likelihood. In some embodiments, the fraud indication may indicate that a manual review of the case should be initiated.

The fraud indication may be a message and/or a token. The fraud indication may be transmitted to an entity which is capable of handling and/or of further processing the fraud indication. In some embodiments, the entity which is capable of handling the fraud indication may be a (third-party) payment service provider which may initiate a request for a payment as a result of the user (device) not complying with the contracting system.

In some embodiments, the fraud indication may be provided if no compliance-related data is received from the user-management unit (e.g., because no compliance-related data is assigned to the identifier) and/or if no control message is received from the device.

This may enable a simplified determining whether the user (device) complies with the contracting system or not.

Preferably, the compliance-related data, obtained from the user management unit, may at least comprise a current address of the device.

The current address of the device may be referred to as an internet protocol (IP) address of the device (IPv4 or IPv6), a media access control (MAC) address, a (alpha-) numerical key that is assigned to the device as part of the contracting system (such as, e.g., a token) and/or any other suitable address indicator.

This may enable an unambiguous and unique identification of the device and a potential assignment to a respective user. What is more, the current address of the device may facilitate an ubiquitous contacting of the device when deemed necessary.

Preferably, the method may further comprise registering the device at a relay unit prior to usage, wherein the registering preferably comprises registering a current address of the device.

In some embodiments, the relay unit may be referred to as a proxy server, a relay, a concentrator and/or a router.

In some embodiments, the usage may be a compliant usage.

The registering may be referred to as assigning device information to a certain contract of the contracting system. In some embodiments, the registering may comprise adding the device (and optionally user-related) information to a database which comprises the compliance-related data. The database may, e.g., be stored in the user management unit.

In some examples, the device may register itself at the relay unit, e.g., by sending a respective registration message from the device to the relay unit.

The registering may efficiently enable an assignment of the device to a certain contract. Moreover, if the registering comprises registering a current address of the device, the device may be contacted (e.g., by the identification unit, the user management unit and/or any other suitable entity). This may generally support a ubiquitous near-real-time obtaining of a control message from the device, even though the device may not necessarily be in (close) proximity to the identification unit.

Preferably, the obtaining of the control message from the device may further comprise sending, by the identification unit, a request for the control message to the relay unit, forwarding, by a relay unit, of the request to the device based at least in part on the registering of the device at the relay unit and receiving, by the identification unit, of the control message.

In some embodiments, the identifier may be associated with the device. To contact the device, the identification unit may transmit the identifier to the relay unit (as the identification unit may not be aware of a current address of the device based on which the identification unit may contact the device directly) as well as a request for a control message.

This may support improved privacy when determining the compliance of the user (device) with the contracting system. This is facilitated as the identification unit does not require knowledge about, e.g., a current address of the device.

Consequently, the identification unit is not required to store such personal data. Instead, the relay unit may be the sole unit which stores information of a current address of the user (device). Therefore, no personal data (e.g., comprising the current address of the device) needs to be communicated between the relay unit and the identification unit. Moreover, such an implementation may support an ubiquitous verification whether the device still operates according to its specifications (e.g., whether the device may be callable by, e.g., the identification unit such that a control message may be requested). This is, in case no control message is received at the identification unit from the device, a potential absence of the compliance may be determined.

Preferably, the control message may be received from the relay unit or the control message may directly be received from the device.

The relay unit may be configured to relay requests received from the identification unit to the user management unit and/or to the device. Alternatively, the relay unit may be configured to relay data and/or messages received from the device and/or the user management unit to the identification unit.

In case the control message is received from the device, a direct communication between the device and the identification unit may be prevented. This may simplify the hardware requirements set for the identification as the identification unit may not necessarily be required to be provided with dedicated communication means (e.g., cellular communication means). Moreover, there is no need that the identification unit needs to be provided with information that may allow an identification of the device. Therefore, the amount of personal data stored at the identification unit may be minimized which may improve privacy. In case the control message is received from the device directly, i.e., bypassing the relay unit, the overall data traffic may be minimized.

Moreover, the present disclosure relates to a computer program product comprising instructions which, when the program is executed by a computer, cause the computer to carry out the method as described herein.

The computer program product may be provided or delivered as a storage medium, such as a memory card, USB stick, CD-ROM, DVD, or in the form of a downloadable file from a server on a network. This can be done, e.g., in a wireless communication network by transferring a corresponding file with the computer program product.

The computer program product may be executed on a processor (e.g., a central processing unit, CPU), a field programmable gate array (FPGA), a graphics processing unit (GPU) and/or a tensor processing unit (TPU).

Furthermore, the present disclosure relates to an apparatus for determining a compliance of a device with a contracting system, wherein the apparatus may comprise a processor which is configured to acquire an identifier which is specific to a device of the user, obtain compliance-related data associated with the device, from a user management unit based on the acquired identifier, obtain a control message from the device, wherein the control message comprises compliance-related data and determine whether the compliance-related data obtained or observed from the device complies with the compliance-related data obtained from the user management unit.

In some embodiments the determining whether the compliance-related data obtained or observed from the device may comprise a collecting of relevant observable data of the device.

In some embodiments, the apparatus may be provided as the identification unit as described herein. In some embodiments, the apparatus may be provided as a component of the identification unit. In some embodiments, the apparatus may be provided as a device that is in communication with the identification unit.

This may allow an adaptation of the method described herein to a variety of applications.

Preferably, the processor may be further configured to execute the method as disclosed herein.

The processor may be a CPU, an FPGA, a GPU and/or a TPU. In some embodiments, the apparatus may further comprise a memory (e.g., a transient and/or a non-transient memory) which may be coupled and in communication with the processor.

Preferably, the device may be a nomadic device, preferably a user device, more preferably a cell phone, a vehicle, more preferably a car.

A nomadic device may be a device which does not remain stationary over the course of time. The nomadic device may be a means of transportation and/or a means of conveyance. The means of transportation and/or a means of conveyance may be a guided means (e.g., by a conductor) or may at least partially be an autonomous device. The means of transportation and/or a means of conveyance may move on roads, rail tracks, in water, air and/or space.

In case the device is a vehicle, the compliance-related data may comprise information such as a type of a vehicle, a model of the vehicle, a configuration of the vehicle, a weight of the vehicle, a propulsion of the vehicle, a fuel consumption of the car, an emission class of the vehicle, etc.).

In case the device is provided as a cell phone, it may be used across a variety of vehicles.

In some examples, the device may be a device carried by a living creature such as, e.g., an animal or a pet. This may facilitate a herd management.

This may enable a determining of the compliance of the user (device) with the contracting system by means of a variety of different entities.

Preferably, the compliance of the device may be related to a valid contract of the device with an infrastructure operator and/or entity owner.

An infrastructure operator may, e.g., operate a road and/or a road network, a parking area, a roadhouse, a city tolling operator, a service and/or charging station, a dispatching unit (e.g., a harbor, a train station, a bus station, an airport), a private entity (e.g., a production facility, a logistics center, a dump, a supplier/disposer, etc.), a mobility and/or sharing provider (e.g., car sharing and/or bike sharing, etc.).

In case the compliance relates to a compliance with a tolling provider, the determining of the compliance may comprise a determining whether the user (device) has a valid contract with the tolling provider (which may include a determining whether the user has provided valid payment data to be charge in accordance with a usage of toll roads, etc.), is currently using a toll road (for which the user shall be charged a respective toll) and/or whether the user has already prepaid a certain toll for using a respective toll road.

In some embodiments, the compliance may relate to a compliance of the device with a contracting system.

In case the compliance relates to a parking system, the determining of the compliance may comprise a determining whether the user (device) has a valid contract with a parking service (which may include a determining whether the user has provided valid payment details, etc.) prover. In some embodiments, the determining of the compliance with the contracting system may require determining whether the user has provided the contracting system with valid payment data such that the user may be charged in accordance of the user using a parking area provided and/or administrated by the parking service. The parking area may be a parking lot.

In some examples, the compliance may relate to a Quality of Service (QoS) application such as, e.g., access to fast lanes (e.g., on highways) and/or a preferred dispatch (e.g., at harbors, access to tunnels, access to parking area, etc.). In this context, the determining of the compliance may refer to a verification if a respective user (who is associated with a respective device) is entitled to, e.g., use a respective fast lane and/or may comprise initiating a payment process for the user if it is determined that the user is using, e.g., a fast lane.

In some embodiments, the determining whether a user (device) complies with the contracting system may comprise determining whether a user of the device has created a user account with a respective service provider.

This may support a deployment of a determining of a compliance of a user (device) with the contracting system to a broad range of real-world applications.

Preferably, the identification unit may be one of a license plate acquisition unit, a transceiver unit, and/or a biometric identification unit.

In case the identification unit is a license plate acquisition unit, the identification unit may be provided with a camera system. The camera system may comprise an identifier recognition unit. The camera system may thus be configured to acquire an identifier associated with the device.

In some embodiments, the identification unit may be a road-side unit that is permanently or temporarily installed on a side of a road (e.g., of a toll road and/or at an entrance to a parking area). In some embodiments, the identification unit may be installed on a bridge that crosses a road (e.g., a toll road and/or an entrance of a parking area).

In some embodiments, a location of the identification unit may be known. Based thereon, it may be determined at which location the device may have passed by the identification unit.

In some embodiments, this may facilitate a determination that a user associated with the device may have used a toll road at a certain location. If multiple identification units are deployed along a toll road, a toll to be charged to the user may be determined, e.g., based on a distance driven on the toll road.

In some embodiments, this may facilitate a determination that a user has entered a certain parking area. Based thereon, a corresponding rate to be charged to the user may be determined for using the parking area.

In some embodiments, the biometric identification unit may be configured to recognize a user based on an iris scan, a face recognition, a fingerprint and/or any other suitable parameter by means of which the user may be identified.

In case the identification unit is provided with a transceiver, the transceiver may be configured to communicate with the identifier, e.g., based on a radio frequency communication such as, e.g., 5G, WiFi, Bluetooth, NFC, etc.

Preferably, the identifier may be a license plate number, a cell phone ID, a badge, a photograph, a biometric identifier and/or a hash value.

In general, the identifier may be any observable which may be directly obtained and/or derived from information gathered by the identification unit.

In case the device is a cell phone or contains a mobile phone as a permanent or temporary component, the identifier may be a cell phone ID such as a cell phone number, an IP address of the cell phone, an international mobile equipment identity (IMEI) of the cell phone, a token generated by an app installed on the cell phone, etc.

The badge may, e.g., be attached to the windshield of, e.g., a vehicle. In some embodiments, an identification number may be imprinted into the badge such that the vehicle may be identified due to the assignment of the identification number. The imprinted number may be acquired by the identification unit (e.g., by a camera of the identification unit). In some embodiments, the badge may comprise a transponder. The transponder may be configured to transmit the identification number to the identification unit. In some embodiments, the identifier may be a hash value of the identification number.

In some embodiments, the photograph may depict a license plate (from which a license plate number may be derived), a photograph of the user, etc.

In some embodiments, the biometric identifier may relate to a fingerprint, a face recognition of the user and/or any other suitable observable which may be applicable for identifying a user.

This may efficiently support an identification of the device based on a variety of device-specific parameters.

Preferably, the user management unit may comprise a whitelist which, when an entry of the whitelist is associated with the device, may indicate a potential compliance of the device with the contracting system and/or wherein an absence of an entry in the whitelist that is associated with the device may indicate a potential fraud of the device with the contracting system.

A fraud may be referred to as an absence of a compliance of the user (device) with the contracting system.

In some embodiments, the whitelist may be comprised by a database. In some embodiments, the whitelist may comprise user (device) device-specific information (e.g., information that is obtained as part of the registering of the device).

The whitelist may be referred to as a list that lists those users and/or devices that do have a valid contract with the contracting system and an associated service provider, respectively. An entry of the whitelist may be specific to a certain user, a device, a vehicle of the user, etc. and may indicate whether a respective valid contract exists.

Providing a whitelist and determining, based thereon, whether a user (device) complies with the whitelist, may enable an efficient discovery of a potential fraud attempt.

Furthermore, the present disclosure allows for transparent information to users about a compliance check, if desired by both the service provider and/or the user.

For this purpose, requests for the current status may be recorded by a vehicle-mounted device (e.g., a (user) device) and/or directly signalled or presented as a log to the user.

In another embodiment, the identification unit may be configured to (re)use a same mechanism or parts of it for requesting inspection data to inform the (vehicle-mounted) device of the outcome of the inspection (e.g., the compliance check), in particular whether or not a suspected case (e.g., a potential fraud attempt) has been created. In other words, the method may comprise informing the device about a result of the determining of the compliance.

This may generally improve transparency in accordance with advanced data protection requirements and the assumption that compliance increases when control processes are visible (analogous to the flashing lights in speed enforcement, which are technically no longer necessary).

Additionally, the present disclosure relates to a non-transitory computer-readable medium storing instructions that, when executed by one or more processors, cause the one or more processors to perform operations which may comprise acquiring, by an identification unit, an identifier which is specific to a device of the user, obtaining, by the identification unit, compliance-related data associated with the device, from a user management unit based on the acquired identifier, obtaining, by the identification unit, a control message from the device, wherein the control message comprises compliance-related data and determining, by the identification unit, whether the compliance-related data obtained from the device complies with the compliance-related data obtained from the user management unit.

Additionally, the present disclosure relates to a surveilled system. The surveilled system may comprise a user device (e.g., the user device as disclosed herein). Moreover, the surveilled system may comprise a physical entity.

In some embodiments, the user device may at least temporarily (or permanently) be affixed to the physical entity or may be carried together with the physical entity. The physical entity may be a vehicle.

During compliance checking, characteristics of the physical entity that can be observed by the identification unit can be treated as those of the device.

In some embodiments, the surveilled system may be surveilled by the identification unit as disclosed herein.

In some embodiments, the surveilled system may be a toll collect system.

Aspects described herein with a reference to the method may equally apply to the apparatus described herein and vice versa.

Unless explicitly indicated otherwise, all embodiments disclosed herein are compatible with each other and may be combined with each other even though they may have been discussed in isolation from each other.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.

### BRIEF DESCRIPTION OF THE DRAWINGS

Fig. 1 depicts a sequence diagram of a communication sequence according to an embodiment of the present disclosure,
Fig. 2 depicts a flowchart of a method according to an embodiment of the present disclosure, and
Fig. 3 depicts an illustration of an apparatus according to an embodiment of the present disclosure.

### DETAILED DESCRIPTION

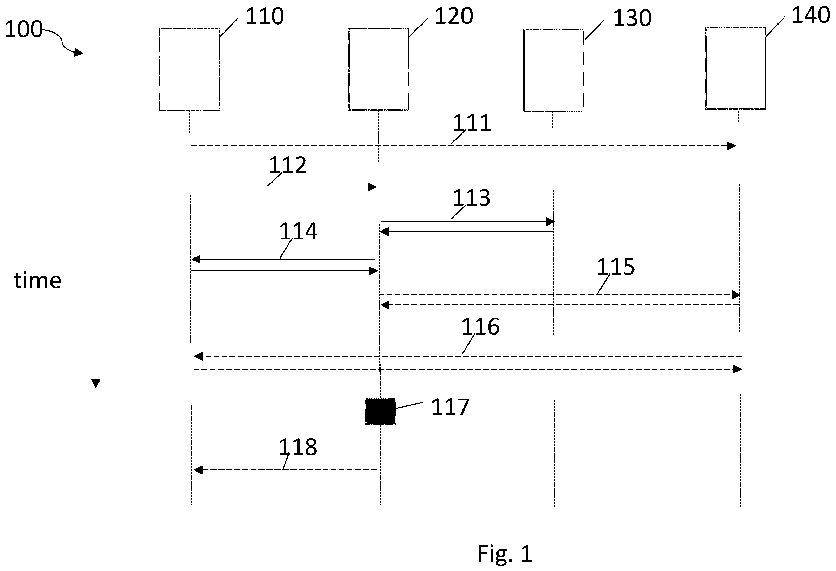

Fig. 1 depicts a sequence diagram 100 illustrating an exemplary communication sequence between a device 110, an identification unit 120, a user management unit 130 and a relay unit 140 for determining a compliance of a device with a contracting system as outlined herein.

Device 110 may register 111 with the relay unit 140. Thereby, the device 110 may, *inter alia,* inform the relay unit 140 about a current address of the device 110. In some embodiments, the device 110 may signal its model, its type of device, etc. to the relay unit 140.

Subsequently, the identification unit 120 may acquire 112 an identifier, wherein the identifier is associated with the device 110.

It will be appreciated that even though a single identification unit 120 is depicted in Fig. 1 and discussed below, more than one identification unit 120 may be used for facilitating the determining of the compliance according to the present disclosure.

In some embodiments, the identification unit 120 may acquire additional (observable) information which may be used for a subsequent compliance check. In some embodiments, the additional information may be unique to the device 110. In some embodiments, the additional information may not be unique to the device 110 (e.g., in case the additional information comprises information related to a vehicle type, a color, a number of axles of the vehicle, etc.). In some embodiments, the additional information may be used as a sanity check (and/or providing additional evidence) for a compliance with a contracting system or for a potential fraud attempt.

The identification unit 120 may obtain compliance-related data associated with the device, from the user management unit 130 based on the acquired identifier. The obtaining may comprise a requesting 113 of the compliance-related data associated with the user. The request 113 for compliance-related data may comprise a first message, sent from the identification unit 120 to the user management unit 130, that comprises a query for compliance-related data. The request 113 for compliance-related data may further comprise a second message, a response message, transmitted from the user management unit 130 to the identification unit 120, which comprises the queried and thus desired compliance-related data.

In some embodiments, the acquired compliance-related data may be obtained as a result of an initiated request on demand for obtaining the compliance-related data. That is, the identification unit 120 may request the compliance-related data from the user management unit 130when the compliance-related data is ultimately needed. In some embodiments it may be possible to provide a respective whitelist to the identification unit 120 (or to distribute a whitelist to the identification units 120 in case more than one identification unit 120 is deployed). The providing of the whitelist may be executed when the identification unit 120 is switched on or when it is updated.

This may generally reduce a load and availability requirements for an on-demand endpoint (which may only be used in case local data is not available or up to date) and increases privacy by hiding observations of the device 110 by the identification unit 120 from the user management unit 130.

Afterwards, the identification unit 120 may obtain a control message from the device 110. The obtaining may comprise a requesting 114 of the control message from the device 110. In some embodiments, the request 114 for a control message may be transmitted directly from the identification unit 120 to the device 110. The request 114 may comprise a first message that comprises a query for the control message which is sent from the identification unit 120 to the device 110. The request 114 may further comprise a second message, a response message, that comprises or is the requested control message. The second message is sent from the device 110 to the identification unit 120.

In some embodiments, the request for a control message may not be sent directly from the identification unit 120 to the device 110 (e.g., if the identification unit is not aware of a current device specific identifier (e.g., an address of the device)). In such a case, the identification unit 120 may send a request 115 for a control message to the relay unit 140. The request 115 for the control message may comprise a first message that comprises a query for the control message and is sent from the identification unit 120 to the relay unit 140. This may facilitate a real-time communication of the identification unit 120 with the device 110 via the relay unit 140 as the relay unit 140 may always be aware of, e.g., a current address of the device 110 even though the device 110 may not be in close proximity to the identification unit 120.

In any case, the control message may comprise an identifier that identifies the device 110, a current location of the device 110 and/or may comprise further (at least partially requested) information.

The relay unit 140 may determine an address of the device 110 based on the registering 111 of the device 110 at the relay unit 140. The relay unit 140 may send a request 116 for a control message to the device 110. The request 116 for the control message may comprise a first message, a query for the control message, sent from the relay unit 140 to the device 110. The request 116 may further comprise a second message, the actual control message, sent from the device 110 to the relay unit 140.

The relay unit 140 may forward the control message to the identification unit 120 as a second message comprised by the request 115 for a control message.

In an embodiment, the identification unit 120 may inform the device 110, e.g., by means of requests 115 and 116, at which address the identification unit 120 may be reached, e.g., by the device 110. Consequently, requested data may directly be sent from the device 110 to the identification unit 120. In such an embodiment, a communication with the relay unit 140 may be rendered obsolete in the response branches of requests 115 and 116.

The identification unit 120 may perform a determining 117 whether the device 110 complies with the contracting system based on the compliance-related data and the control message.

A result of the determining 117 whether the device 110 complies with the contracting system may be forwarded to a respective stakeholder entity, such as, e.g., a service provider which provides the contracting system and/or a billing entity and/or a third-party service provider.

The execution of a compliance check may be signaled to the user of the device 110 based on the request of a control data set 116.

The result of a compliance check may be signaled to the user of the device 110 after the determining 117 via a connection analog to requests 115 and 116 or using direct communication of the identification unit 120 with the device 110 using its disclosed address.

In some embodiments, the compliance-related data received from the user management unit 130 may indicate that the contract between the user (device) and a service provider of the contracting system has elapsed and/or has been cancelled wherein the control message received from the device may still indicate a valid contract. In such an embodiment, in which a contradiction occurs, a fraud indication may be provided (e.g., to an entitled staff member of the service provider for manual review of the respect case and/or to another entity (e.g., a third-party service provider) for subsequent criminal prosecution).

In some examples, the identification unit 120 may inform 118 the device 110 about a result of the compliance check (i.e., whether a conformity with a contracting system has been identified or whether a potential fraud attempt has been identified).

It will be appreciated that the determining whether a user (device) complies with a contracting system may comprise an execution of all of the aforementioned communications. However, it may also be possible that the determining whether a user (device) complies with a contract system may only comprise an execution of some of the aforementioned communications.

As a general remark, all communications set out herein may be encrypted and authenticated using state-of-the-art technologies, e.g., using public key infrastructure (PKI) procedures.

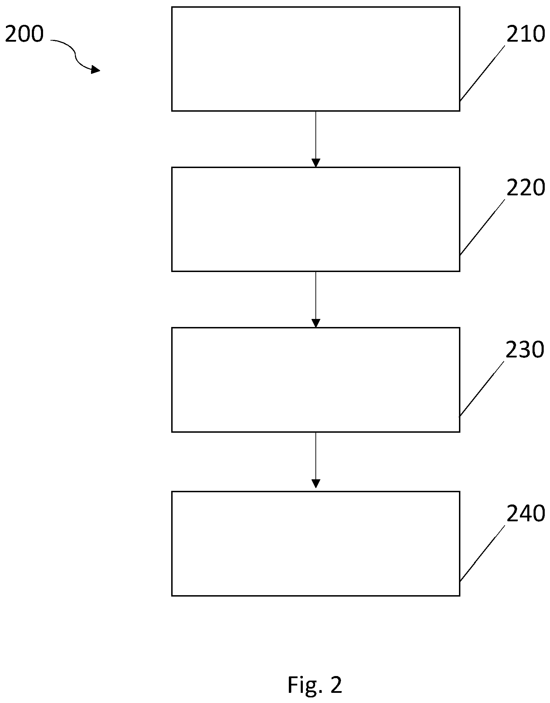

Fig. 2 depicts a flowchart of an exemplary method 200 for determining a compliance of a device with a contracting system. The method 200 may, e.g., be a computer-implemented method.

In step 210, an identifier is acquired, by an identification unit, which is specific to the device.

In step 220, compliance-related data that is associated with the device is obtained, by the identification unit, based on the acquired identifier.

In step 230, a control message is obtained, by the identification unit, from the device, wherein the control message comprises compliance-related data.

In step 240, it is determined, by the identification unit, whether the compliance-related data obtained from the device complies with the compliance-related data obtained from the user management unit.

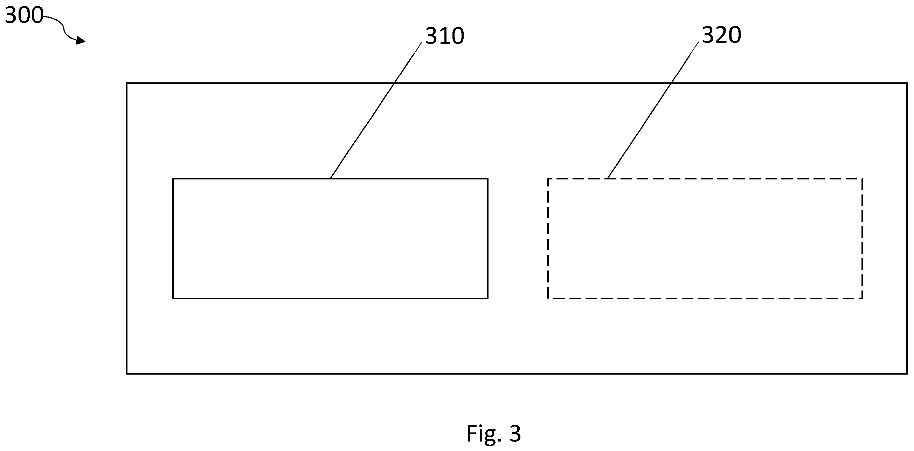

Fig. 3 depicts an illustration of an exemplary apparatus 300 for determining a compliance of a device with a contracting system. The apparatus 300 may comprise a processor 310 and may comprise a memory 320. The memory 320 may store instructions or data (cached or a distributed whitelist) in accordance with the embodiments described herein, wherein the processor 310 may be configured to execute the instructions.

In particular, the processor 310 may be configured to acquire an identifier which is specific to a device, obtain compliance-related data associated with the device, from a user management unit based on the acquired identifier, obtain a control message from the device, wherein the control message comprises compliance-related data and determine whether the compliance-related data obtained from the device complies with the compliance-related data obtained from the user management unit.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer. In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method (100, 200) for determining a compliance of a device (110) with a contracting system, wherein the method (100, 200) comprises:
acquiring (112, 210), by an identification unit (120), an identifier which is specific to the device (110);
obtaining (113, 220), by the identification unit (120), compliance-related data associated with the device (110), from a user management unit (130) based on the acquired identifier;
obtaining (114, 115, 116, 230), by the identification unit (120), a control message from the device (110), wherein the control message comprises compliance-related data; and
determining (117, 240), by the identification unit (120), whether the compliance-related data obtained from the device (110) complies with the compliance-related data obtained from the user management unit (130).

2. The method (100, 200) of claim 1, wherein the obtaining of the compliance-related data further comprises:
providing, by the identification unit (120), the acquired identifier and a request (113) for specific compliance-related data to the user management unit (130);
providing, by the user management unit (130), the compliance-related data in accordance with the request (113) to the identification unit (120).

3. The method (100, 200) of any of the preceding claims, wherein the method further comprises:
providing, by the identification unit (120), a fraud indication in case it is determined that the compliance related data obtained or observed from the device (110) does not comply with the compliance-related data obtained from the user management unit (130).

4. The method (100, 200) of any of the preceding claims, wherein the compliance-related data, obtained from the user management unit (130), at least comprises a current address of the device (110).

5. The method (100, 200) of any of the claims 1 to 4 wherein the method further comprises:
registering (111) the device (110) at a relay unit (140) prior to usage, wherein the registering (111) preferably comprises registering a current address of the device (110).

6. The method (100, 200) of any of the claims 1 to 5, wherein the obtaining of the control message from the device (110) further comprises:
sending, by the identification unit (120), a request (115) for the control message to a relay unit (140);
forwarding, by the relay unit (140), of the request to the device (110) based at least in part on the registering of the device (110) at the relay unit (140);
receiving, by the identification unit (120), of the control message.

7. The method (100, 200) of claim 6, wherein the control message is received from the relay unit (140), or
wherein the control message is directly received from the device (110).

8. The method (100, 200) of any of the claims 1 to 7, further comprising:
informing (118) the device (110) about a result of the determining of the compliance.

9. A computer program product comprising instructions which, when the program is executed by a computer, cause the computer to carry out the of any of the claims 1 to 8.

10. An apparatus (300) for determining a compliance of a device with a contracting system, wherein the apparatus (300) comprises a processor (310) which is configured to:
acquire (112), by an identification unit (120), an identifier which is specific to a device (110);
obtain (113), by the identification unit (120), compliance-related data associated with the device, from a user management unit (130) based on the acquired identifier;
obtain (114), by the identification unit (120), a control message from the device, wherein the control message comprises compliance-related data; and
determine (117), by the identification unit (120), whether the compliance-related data obtained or observed from the device complies with the compliance-related data obtained from the user management unit (130).

11. The apparatus (300) of claim 10, wherein the processor is further configured to:
execute the method of any of the claims 1 to 8.

12. The method (100, 200) of any of the claims 1 to 8 or the apparatus of any of the claims 10 or 11, wherein the device (110) may be a nomadic device, preferably a user device, more preferably a cell phone, a vehicle, more preferably a car.

13. The method (100, 200) of any of the claims 1 to 8 or 12 or the apparatus (300) of any of the claims 10 to 12, wherein the compliance of the device (110) is related to a valid contract of the device (110) with an infrastructure operator and/or entity owner.

14. The method (100, 200) of any of the claims 1 to 8 or 12 or 13 or the apparatus (300) of any of the claims 10 to 13, wherein the identifier is a license plate number, a cell phone ID, a badge, a photograph, a biometric identifier and/or a hash value.

15. The method (100, 200) of any of the claims 1 to 8 or 12 to 14 or the apparatus (300) of any of the claims 10 to 14,
wherein the user management unit (130) comprises a whitelist which, when an entry of the whitelist is associated with the device (110), indicates a potential compliance of the device (110) with the contracting system; and/or
wherein an absence of an entry in the whitelist that is associated with the device (110) indicates a potential fraud of the device (110) with the contracting system.

## Amended claims

### Amended claims in accordance with Rule 137(2) EPC.

1. A method (100, 200) for determining a compliance of a device (110) with a contracting system, wherein the method (100, 200) comprises:
acquiring (112, 210), by an identification unit (120), an identifier which is specific to the device (110);
obtaining (113, 220), by the identification unit (120), compliance-related data associated with the device (110), from a user management unit (130) based on the acquired identifier;
obtaining (114, 115, 116, 230), by the identification unit (120), a control message from the device (110), wherein the control message comprises compliance-related data; and
determining (117, 240), by the identification unit (120), whether the compliance-related data obtained from the device (110) complies with the compliance-related data obtained from the user management unit (130).

2. The method (100, 200) of claim 1, wherein the obtaining of the compliance-related data further comprises:
providing, by the identification unit (120), the acquired identifier and a request (113) for specific compliance-related data to the user management unit (130);
providing, by the user management unit (130), the compliance-related data in accordance with the request (113) to the identification unit (120).

3. The method (100, 200) of any of the preceding claims, wherein the method further comprises:
providing, by the identification unit (120), a fraud indication in case it is determined that the compliance related data obtained or observed from the device (110) does not comply with the compliance-related data obtained from the user management unit (130).

4. The method (100, 200) of any of the preceding claims, wherein the compliance-related data, obtained from the user management unit (130), at least comprises a current address of the device (110).

5. The method (100, 200) of any of the claims 1 to 4 wherein the method further comprises:
registering (111) the device (110) at a relay unit (140) prior to usage, wherein the registering (111) preferably comprises registering a current address of the device (110).

6. The method (100, 200) of any of the claims 1 to 5, wherein the obtaining of the control message from the device (110) further comprises:
sending, by the identification unit (120), a request (115) for the control message to a relay unit (140);
forwarding, by the relay unit (140), of the request to the device (110) based at least in part on the registering of the device (110) at the relay unit (140);
receiving, by the identification unit (120), of the control message.

7. The method (100, 200) of claim 6, wherein the control message is received from the relay unit (140), or
wherein the control message is directly received from the device (110).

8. The method (100, 200) of any of the claims 1 to 7, further comprising:
informing (118) the device (110) about a result of the determining of the compliance.

9. A computer program product comprising instructions which, when the program is executed by a computer, cause the computer to carry out the of any of the claims 1 to 8.

10. An apparatus (300) for determining a compliance of a device with a contracting system, wherein the apparatus (300) comprises a processor (310) which is configured to:
acquire (112), by an identification unit (120), an identifier which is specific to a device (110);
obtain (113), by the identification unit (120), compliance-related data associated with the device, from a user management unit (130) based on the acquired identifier;
obtain (114), by the identification unit (120), a control message from the device, wherein the control message comprises compliance-related data; and
determine (117), by the identification unit (120), whether the compliance-related data obtained or observed from the device complies with the compliance-related data obtained from the user management unit (130).

11. The apparatus (300) of claim 10, wherein the processor is further configured to:
execute the method of any of the claims 2 to 8.

12. The method (100, 200) of any of the claims 1 to 8 or the apparatus of any of the claims 10 or 11, wherein the device (110) may be a nomadic device, preferably a user device, more preferably a cell phone, a vehicle, more preferably a car.

13. The method (100, 200) of any of the claims 1 to 8 or 12 or the apparatus (300) of any of the claims 10 to 12, wherein the compliance of the device (110) is related to a valid contract of the device (110) with an infrastructure operator and/or entity owner.

14. The method (100, 200) of any of the claims 1 to 8 or 12 or 13 or the apparatus (300) of any of the claims 10 to 13, wherein the identifier is a license plate number, a cell phone ID, a badge, a photograph, a biometric identifier and/or a hash value.

15. The method (100, 200) of any of the claims 1 to 8 or 12 to 14 or the apparatus (300) of any of the claims 10 to 14,
wherein the user management unit (130) comprises a whitelist which, when an entry of the whitelist is associated with the device (110), indicates a potential compliance of the device (110) with the contracting system; and/or
wherein an absence of an entry in the whitelist that is associated with the device (110) indicates a potential fraud of the device (110) with the contracting system.
